# EUROPEAN PATENT SPECIFICATION

(11) **EP 0 414 666 B1**
(45) Date of publication and mention of the grant of the patent: **03.03.1993**
(21) Application number: 87906684.3
(22) Date of filing: 06.10.1987
(51) Int. Cl.: B22F 3/10, C09K 3/10, C22C 1/09, F16L 19/00

(54) **FIBER METAL OBJECT AND A METHOD FOR ITS MANUFACTURING**
FASERMETALLGEGENSTAND UND VERFAHREN ZUR HERSTELLUNG
OBJET EN FIBRES DE METAL ET PROCEDE DE FABRICATION

(30) Priority: 09.10.1986 SE 8604280
(43) Date of publication of application: 06.03.1991
(73) Proprietor: WIBERG, Rolf, S-803 79 Gävle (SE)
(72) Inventor: WIBERG, Rolf, S-803 79 Gävle (SE)
(74) Representative: Wärulf, Olov
(86) International application number: SE8700448
(87) International publication number: WO8802675

(56) References cited:
- DE-A- 2 043 034
- DE-A- 2 239 840
- DE-B- 1 905 595
- GB-A- 2 136 512
- GB-A- 2 136 890
- US-A- 3 114 197
- US-A- 4 549 741

## Description

### TECHNICAL AREA

The present invention concerns a method for manufacturing of an object of fibre metal, at which metal fibres are separated by cutting from e.g. a material, which can be constituted by a wire, in a cutting-machine showing one or several cutting edges. The invention also includes metal objects of different shape, which are manufactured by the method according to the invention.

### BACKGROUND TECHNICS

It is already known to use metal fibres as reinforcing elements in gaskets, e.g. gaskets for pipes. The german patent publication no 695 579 (from 1940) describes a method for manufacturing of a gasket material containing metal fibres, which are manufactured by cutting, and which are bounded together with an organic binder as e.g. rubber. A gasket manufactured this way shows a good heat conducting ability, but is not useable at higher temperatures, e.g. at such temperatures prevailing in an exhaust system to a combustion engine, in particular in connection to the exhaust openings of the engine. The british patent publication no 2 136 512 A describes a sealing material which is manufactured from thin metal wires, preferably of stainless steel, which in an initial position are knitted to a mesh. The mesh is convoluted into a cylinder preform around a mandrel, after which it will be compressed in a die into a desired form and with a density of 40 - 70 % of the density of the metal wire. The compressed object after that is dipped into a liquid containing metal oxides, at which this is penetrating the porous structure of the object. This metal oxide can be constituted by titanum dioxide and be suspended in water containing acrylic-resin and polyester-resin.

The british patent publication no 2 136 890 A describes a sealing material which is manufactured from a mesh of thin metal wires. The sealing material is formed as a plane ring-shaped gasket, along which inner diameter rings of refractory material are arranged in that way that the metal wire material at the compressing of the gasket is imparted a structure with a higher density in the area closed to the refractory rings. This sealing material is not provided with any further additional material for filling up the pores between the integral metal wires, but its gas tightness is defined of the compression closed to the refractory rings.

The american patent publication no 4 549 741 describes another embodiment of a ring-shaped gasket, containing a layer of metal wires formed as a mesh, which has been compressed to a density of 35 to 45 % of the density of the actual metal wire. The gasket has been provided with a collar of sheet metal, which is preventing e.g. hot gases in an exhaust system to come in contact with the compressed layer of wires, which is too porous to prevent the gases to penetrate out of the system.

### DESCRIPTION OF THE INVENTION

The purpose with the present invention is to achieve a method for manufacturing of an object of fibre metal, at which fibres are separated from a steel material, which can be constituted by a wire, in a cutting machine showing one or several cutting edges, which gives a finished fibre metal object, which qualities surpasses the qualities of up to now known objects manufactured of fibre metal or of a mesh of thin metal wires. The purpose has been achived with a method, which is characterised in that a liquid with additives, which consist of sulphide forming and/or phosphide forming and/or fluoride forming substances being in a solution, emulsion or suspension is added to the wire before the cutting, or to the steel fibres directly at the cutting before the temperature of the steel fibres is lowered below a critical oxidation temperature of the additives, at which the liquid is vaporized and a metal oxide and a metal sulphide and/or a metal phosphide and/or a metal fluoride is formed on the surface of the fibres. The fibres coated whith the additives after that are compressed into a on fore hand given shape, e.g. a semi-finished product, which is proposed to be worked further in subsequent operations.

Preferably the liquid with the additives is added to the parts of the wire by help of a absorbating pad before the cutting. Further the, into a semi-finished product compressed and with additives coated metal fibres, can be heated at least up to a temperature, at which at least a part of the metal fibres are sintering. Thereby it is to prefer that the semi-finished product is heated in the presence of a protective gas, which prevents oxidation of the metal fibres in the semi-finished product. This protective gas can be constituted of e.g. argon, nitrogene or gases from a combustion in a combustion engine or the similar.

In an alternative embodiment of the invention the metal fibres in the semi-finished product are welded together in a heated condition by further compression. In this embodiment of the invention the fibre metal object shows a density, which principally conformes whith the density of the joining fibres. Metal fibres of a carbon steel whith a corbon content of 0,08 % gives a density of the object of around 7,8 kg/dm³, i.e. corresponding to the density of the steel in the metal fibres.

The fibre metal object according to the invention is characterised in that a part of the metal fibres is constituted of a steel with a fibre thickness of 8-80 µm and that additives, which are constituted of compounds of oxygen and sulphur and/or phosphorus and/or fluorine, are added so that they together with oxides from the elements Cu, Al, Cr, Mo, Mn and Ni, which in different combination can join in the metal fibres, are filling up the porosities between the metal fibres. Preferably the unalloyed steel in the metal fibres has a carbon content of 0,08-0,12 %.

By the present invention a method has been achieved which permits manufacturing of fibre metal objects, which can show very varied physical characteristics. In a first example of an embodiment of such a fibre metal object the metal fibres consist of an unalloyed carbon steel whith a carbon content of 0,08-0,12 %. This gives a relative soft metal object, which is specially suitable for use e.g. as a sealing to be brought into an exhaust system in a combustion engine, e.g. an engine for a car. Through the softness of the material the sealing can be elastically compressed at its mounting, which makes the gasket to follow the thermical movements of the surrounding material in the exhaust system. By the additives the gasket becomes complete tight at least after operation for a while when the gasket is heated to a temperature, which contributes a further oxidation of the additives and an alloying whith the present steel fibres.

In a second example, where the fibre metal object also consists of a sealing to be used in an exhaust system, but where the temperature, at the point where the sealing is proposed to be used, is lower than the desired oxidation temperature, a gasket has to be heated to oxidation temperature before mounting in the exhaust system. Thereby the gasket becomes the same characteristics as in the first example.

In a third example the metal fibres also contain other alloys, as chrome and nickel, mixed together with the unalloyd fibres of carbon steel. By this the fibre metal object, particularly after heating up to sintering temperature and welding of the metal fibres, can show a uniform alloy of the participating metals, which grants the metal fibre object new characteristics. Such characteristics can consist in a higher hardness and abrasion resistance and corrosion resistance. Such steel can be formed into objects of a desired shape before heat treatment, e.g. hardening in finished shape the same way as it is known to manufacture steel objects in a powder metallurgical way. E.g. it is also possible to make austenitic steel this way containing 18 % chrome and 8 % nickel.

It is also within the scope of the invention to let the metal fibres be constituted of a mixture of an unalloyed carbon steel and alloyed steel, if it is possible to separate fibres from these by cutting. It is also within the scope of the invention to mix up the steel fibres with fibres from other metals as well as non-metallic material.

In a fourth example cellulose fibres are mixed up together with metal fibres of an unalloyed carbon steel with a carbon content of 0,08 %. The fibre mixture is compressed to a semi-finished product, which is heated in a protective gas to a temperature at which the cellulose fibres carbonize. The fibre metal object this way becomes a more porous structure which was achived in the examples mentioned above and shows a density of around 6 kg/dm³. The average carbon content of the metal fibre object also is higher than in accompanying steel fibre.

### DESCRIPTION TO FIGURES

The invention is described below in an embodiment according to the accompanying figures.

Figure 1 shows schematically, from one side a cutting-machine for manufactoring of metal fibres from a wire.

Figure 2 shows the machine according to figure 1 from obove, at which some details has been left.

Figure 3 shows a track of metal fibre which is going to be convoluted on to a hollow cylinder, which is to be compressed.

Figure 4 shows the hollow cylinder according to figure 3 brought into a compression die.

Figure 5 shows a fibre metal object after compressing of the hollow cylinder according to figure 4.

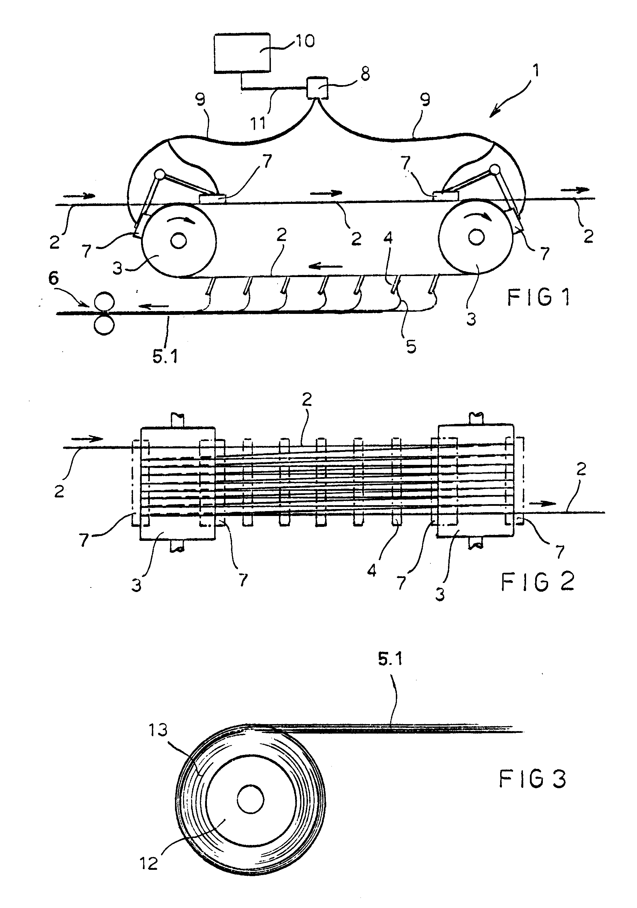

In a known cutting-machine 1 according to figure 1 and 2 a wire 2 is pulled from a wire store, not shown on the figures, several loops around two mutual paralell rolls 3, which are placed at a distance from each other. The wire 2 thereby constitute a track of paralell wires at the upper side of the cutting-machine 1 as well as at is lower side. A plurality of cutting edges 4 are arranged in contact with the wire track on the lower side of the cutting-machine, from which metal fibres 5 are cutted at the movement of the wire. The cutting edges 4 are indicated dotted on figure 2. The metal fibres 5 after that are brought together in a track 5.1 which is advanced and compressed by help of a couple of rolls 6. The cutting edges 4 extend mainly in a right angle to the wire 2 and show a saw-toothed edge, which gives the separated metal fibres 5 a triangular cross section.

A liquid containing oxide forming additives in an emulsion is added to the string 2 by help of four pads 7, in contact with the track of wires 2, partly at each roll 3 and partly at the upper track of wires. The pads 7 are constituted by felted cloth and are connected to a supply pump 8 through pipes 9. The supply pump 8 is connected to a liquid container 10 by another pipe 11.

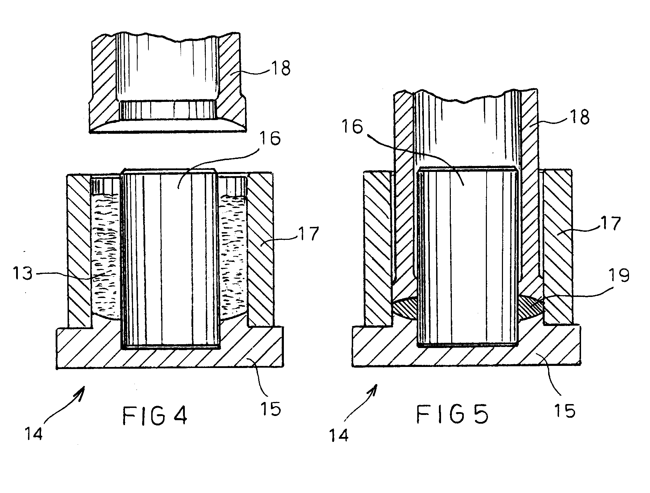

The compressed track of metal fibres 5.1 is convoluted on to a mandrel 12, as shown in figure 3, to a hollow cylinder 13, which is proposed to be compressed to a ring-shaped object. The ring-shaped object e.g. can constitute a gasket supposed to be arranged in an exhaust system to a conbustion engine, e.g. an engine to a car. The outer diameter of mandrel 12 corresponds to the inner diameter of the hollow cylinder 13 and the object. The outer diameter of the hollow cylinder 13 corresponds to the outer diameter of the object, and its lenghts is defined of the width of the metal fibre track 2. The amount of metal fibres in the hollow cylinder 13 is corresponding by weight of the amount required to give the compressed object a desired density. Practically this will be achieved by compressing the metal fibre track 5.1 to a desired weight per lenght unit and convoluting a desired lenght of the track 5.1 on to the mandrel 12.

The hollow cylinder 13 of metal fibres 2 after that is placed in a compression die 14 according to figure 4, which is constituted by a die 15, in the center of which a post 16 is arranged in a central recess. A cylindrical casing 17 is arranged concentrically to the post 16 and fixed by a supporting ring on the die 15. The hollow cylinder 13 of metal fibres 5 is placed in the ring-shaped gap, which is constituted between the post 16 and the casing 17. A cylindrical force plug 18 is brought into the ring-shaped gap to compress the hollow cylinder 13 to a semi-finished product 19 according to figure 4. The shape of the semi-finished product 19 is defind of the shape of the form of the die 15 and the forcing plug 18.

## Claims

1. Method for manufacturing of an object of fibre metal, wherein fibres (5) are produced from a material of an unalloyed or alloyed steel, which preferably is constituted by a wire (2), by cutting said steel material in a cutting machine (1) showing one or several cutting edges (4), **characterised** in that a liquid with additives, which consist of metal oxide forming and sulphide forming and/or phosphide forming and/or fluoride forming substances being in a solution, emulsion or suspension, is added to the wire (2) before the cutting, or to the steel fibres (5) directly at the cutting before the temperature of the steel fibres (5) is lowered below a critical oxidation temperature for the additives, at which the liquid is vaporized and a metal oxide and a metal sulphide and/or a metal phosphide and/or a metal fluoride is formed on the surface of the fibres (5).

2. A method according to claim 1, **characterised** in that the steel fibres (5) coated with additives eventually are mixed with metal fibres of other materials and compressed into a on forehand given shape, e.g. a semi-finished product (13), and that the metal fibres (5) compressed into a semi-finished product (19) are heated at least to a temperature, at which at least a part of the metal fibres (5) starts sintering.

3. A method according to claim 2, **characterised** in that the semi-finished product (19) is heated in presence of a protective gas, which prevents oxidation of the metal fibres (5) in the semi-finished product (19).

4. A method according to claim 2-3, **characterised** in that the metal fibres (5) in the semi-finished product (19) are welded in a heated condition by further compression.

5. A fibre metal object manufactured from metal fibres (5) of at least an unalloyed or alloyed steel, **characterised** in that the metal fibres (5) are coated with a metal oxide and a metal sulphide and/or a metal phosphide and/or a metal fluoride from additives which are brought upon the metal fibres (5), which fully or partly fills up the porosities between the metal fibres (5) in the fibre metal object, and in that the steel fibres (5) are manufactured from an unalloyed steel and with a carbon content of 0,08 - 0,12 % and with a fibre thickness of 8 - 80 µm.

6. A fibre metal object according to claim 5, **characterised** in that the additives are constituted by sulphur compounds and/or phosphide compounds and/or fluoride compounds.

## Patentansprüche

1. Verfahren zur Herstellung eines Gegenstandes aus Fibermetall, wobei Fibern (5) aus einem Material aus unlegiertem oder legiertem Stahl hergestellt werden, der vorzugsweise aus einem Draht (2) besteht, durch Schneiden des genannten Stahles in einer Schneidemaschine (1), die ein oder mehrere Schneidemesser (4) aufweist, dadurch **gekennzeichnet,** daß eine Flüssigkeit mit Zusatzstoffen, die aus metalloxydbilenden und sulfidbildenden und/oder phosphidbildenden und/oder fluoridbildenen Stoffen bestehen, die sich in einer Lösung, Emulsion oder Suspension befinden, vor dem Schneiden auf Draht (2) oder direkt beim Schneiden auf die Stahlfibern (5) aufgetragen wird, bevor die Temperatur der Stahlfibern (5) unter für die Zusatzstoffe kritische Oxydationstemperatur gesunken ist, wobei die Flüssigkeit verdampft und sich Metalloxyd und Metallsulfid und/oder Metallphosphid und/oder Metallfluorid auf der Oberfläche der Fibern (5) bildet.

2. Verfahren nach Anspruch 1, dadurch **gekennzeichnet,** daß die mit Zusatzstoffen beschichteten Stahlfibern (5) eventuell mit Metallfibern aus anderen Materialien gemischt werden und zu einer im Voraus bestimmten Form zusammengepreßt werden, z.B. einem Halbfabrikat (13) und daß die zu einem Halbfabrikat (19) zusammengepreßten Metallfibern (5) zumindest bis auf eine Temperatur erhitzt werden, bei welcher zumindest ein Teil der Metallfibern (5) anfängt zu sintern.

3. Verfahren nach Anspruch 2, dadurch **gekennzeichnet,** daß das Halbfabrikat (19) bei Vorhandensein eines Schutzgases erhitzt wird, das die Oxydation der Metallfibern (5) im Halbfabrikat (19) verhindert

4. Verfahren nach Anspruch 2-3, dadurch **gekennzeichnet,** daß die Metallfibern (5) im Halbfabrikat (19) in erhitztem Zustand zusammengeschweißt werden durch weiteres Zusammenpressen.

5. Ein Fibermetallgegenstand herstellt aus Metallfibern (5) aus zumindest einem unlegierten oder legierten Stahl, dadurch **gekennzeichnet,** daß die Metallfibern (5) beschichtet sind mit einem Metalloxyd und einem Metall sulfid und/oder einem Metallphosphid und/oder einem Metallfluorid aus Zusatzstoffen, die auf die Metallfibern (5) aufgetragen werden, welche die Porositäten zwischen den Metallfibern (5) im Fibermetallgegenstand ganz oder teilweise ausfüllen und daß die Stahlfibern (5) aus einem unlegierten Stahl hergestellt sind und mit einem Kohlegehalt von 0,08-0,12 % und mit einer Fiberdicke von 8-80 µm.

6. Ein Fibermetallgegenstand nach Anspruch 5, dadurch **gekennzeichnet,** daß die Zusatzstoffe aus Schwefelverbindungen und/oder Phosphidverbindungen und/oder Fluorverbindungen bestehen.

## Revendications

1. Méthode de fabrication d'un objet en métal de fibres, dans laquelle les fibres (5) sont produites d'une matière en acier allié ou non-allié, qui de préférence consiste d'un fil (2), coupant ledit acier dans une raboteuse (1), montrant une ou plusieurs entailles (4), **caractérisée** en ce qu'un liquide complémenté d'additifs, consistant de matières créant de l'oxyde métallique et du sulfure et/ou des matières formant du phosphure et/ou du fluoride, en forme de solutions, émulsions ou suspensions, est appliqué au fil (2) préalablement au rabotage, ou aux fibres métalliques (5) immédiatement au rabotage avant que la température des fibres métalliques (5) soit baissée sous la température critique d'oxidation des additifs, où le liquide s'évapore et un oxide métallique et de sulfure métallique et/ou de phosphure métallique et/ou du fluoride métallique se créent sur la surface des fibres (5).

2. Méthode selon la revendication 1, caractérisée en ce que les libres d'acier (5) couvertes d'additifs, éventuellement seront mélangées à des fibres métalliques en d'autres matières et comprimées dans une forme préalablement définie, par exemple, un produit semi-fini (13), et que les fibres métalliques (5) comprimées en produit sémi-fini (19), soient chauffées au moins jusqu'à une température, à laquelle au moins une partie des fibres métalliques (5) commencent à se fritter.

3. Méthode selon la révendication 2, caractérisée en ce que le produit sémi-fini (19) soit chauffé en présence d'un gaz protectif, qui prévient l'oxidation des fibres métalliques (5) dans le produit sémi-fini (19).

4. Méthode selon la révendication 2-3, caractérisée en ce que les fibres métalliques (5) dans le produit sémi-fini (19) sont soudées étant chaudes par compression ultérieure.

5. Un objet en fibre métallique fabriqué en fibres métalliques (5), en, au moins, un acier allié ou non-allié, caractérisé en ce que les fibres métalliques (5) sont couvertes d'oxyde métallique et de sulfure métallique et/ou de phosphure métallique et/ou de fluoride métallique, originaires des additifs appliquées sur les fibres métalliques (5), qui complètement ou partiellement remplissent les porosités entre les fibres métalliques (5), de l'objet en fibre métallique, et que les fibres en acier (5) sont produites en acier non-allié avec un taux de charbon de 0,08- 0,12% et d'une épaisseur des fibres de 8 - 80 µm.

6. Un objet en fibre métallique selon la révendication 5, caractérisé en ce que les additifs consistent de combinaisons sulfureuses et/ou de combinaisons phosphureuses et /ou de combinaisons fluorés.
